# EUROPEAN PATENT APPLICATION

(11) **EP 4 403 406 A1**
(43) Date of publication of application: **24.07.2024**
(21) Application number: 24151127.8
(22) Date of filing: 10.01.2024
(51) Int. Cl.: B60L 53/14, B60L 53/31, B60L 53/62, B60L 53/66, B60L 58/12, H02J 7/00

(54) **CHARGING PILE, ELECTRIC VEHICLE, COMPUTER STORAGE MEDIUM, AND CONTROL METHOD**

(30) Priority: 17.01.2023 CN 202310094858
(71) Applicant: Huawei Digital Power Technologies Co., Ltd., Shenzhen, Guangdong 518043 (CN)
(72) Inventor: TIAN, Ping, Shenzhen, Guangdong 518043 (CN)
(74) Representative: Isarpatent

(57) **Abstract**

This application provides a charging pile, an electric vehicle, a computer storage medium, and a control method, and relates to the field of charging technologies. Even if a charging interface that is in an electric vehicle and that is connected to a charger is fastened, a plurality of charging curves may still be provided for selection, so that a user flexibly selects a required charging curve from the plurality of charging curves based on a requirement of the user. In this way, a limitation of the charging interface on the charging curve is reduced and user experience is improved.

## Description

### TECHNICAL FIELD

This application relates to the field of charging technologies, and in particular, to a charging pile, an electric vehicle, a computer storage medium, and a control method.

### BACKGROUND

In life, an owner of an electric vehicle has a plurality of requirements for a charging rate of the electric vehicle. For example, sometimes the owner has a relatively high requirement for a charging rate, and expects a relatively large amount of power to be charged within a relatively short time, so that fast charging can be performed. Sometimes the owner has no requirement for the charging rate, and expects more cost-effective charging, so that slow charging can be performed. Different life scenarios have different requirements for the charging rate of the electric vehicle. Currently, two charging interfaces are usually disposed in the electric vehicle, which are a direct current charging interface and an alternating current charging interface. The alternating current charging interface may perform the slow charging, and the direct current charging interface may perform the fast charging. If the owner wants to perform the slow charging, but there is only a direct current charging pile in a current environment, the owner has to insert a charger of the direct current charging pile into the direct current charging interface to perform the fast charging. Consequently, experience of the owner deteriorates.

### SUMMARY

This application provides a charging pile, an electric vehicle, a computer storage medium, and a control method, to reduce a limitation of a charging interface on a charging mode, and improve user experience.

According to a first aspect, an embodiment of this application provides a charging pile, including a charger and a processor. The charger may be connected to a charging interface of an electric vehicle, to implement communication and power supply between the charging pile and the electric vehicle. The processor may be configured to: receive, in response to a connection between the charger and the charging interface, a plurality of charging curves that are supported by the electric vehicle and that are reported by the electric vehicle through the charging interface. The charging curve is used to describe a relationship between a charging power and a state of charge of a power battery in the electric vehicle, and different charging curves correspond to different charging powers in a same state of charge. The processor may be further configured to receive a selected charging curve that is selected from the plurality of charging curves, and deliver the selected charging curve to the electric vehicle through the charging interface, so that the electric vehicle performs charging based on the selected charging curve.

In this way, a required charging curve is selected from the plurality of charging curves on a side of the charging pile. Even if the charging interface that is in the electric vehicle and that is connected to the charger is fastened, a plurality of charging curves may still be provided for selection, so that a user flexibly selects a required charging curve from the plurality of charging curves based on a requirement of the user. In this way, a limitation of the charging interface on the charging curve is reduced and user experience is improved.

In some embodiments, the charging interface may be, but is not limited to, a direct current charging interface or an alternating current charging interface, or may be another interface that may be disposed in the electric vehicle and that may be used for charging. This is not limited herein. In addition, a charging curve may be considered as a curve corresponding to a charging mode. Different charging curves correspond to different charging modes, and different charging curves correspond to different charging powers in a same state of charge, so that charging rates in different charging modes are different.

When the charging interface is the direct current charging interface, a corresponding charging mode may include but is not limited to a rapid charging mode, a fast charging mode, a flexible charging mode, and the like. The rapid charging mode has a relatively large charging power and relatively long duration, so that a charging rate is relatively high, and the power battery in the electric vehicle can be charged with sufficient power within a relatively short time, thereby achieving an objective of rapid charging. This is applicable to a scenario in which a charging time is relatively short and power utilization is urgently needed. For example, but not limited to, the user forgets to charge the electric vehicle on the previous day, and finds that power is insufficient to travel to a destination in the morning. In this case, the user may use the rapid charging mode, and charge the electric vehicle with sufficient power in a shortest time. A charging rate of the fast charging mode is slightly less than a charging rate of the rapid charging mode, but the power battery can still be charged with a relatively large amount of power within a relatively short time. A difference lies in that within a same time, an amount of power charged in the rapid charging mode is higher than that in the fast charging mode. This fast charging mode is applicable to a scenario in which a charging time is not quite sufficient. For example, but not limited to, when the electric vehicle runs on a road, and the power is insufficient, the user charges the electric vehicle in a rest area. However, the user wants to fully charge the electric vehicle within a short rest time. In this case, the fast charging mode may be used. The flexible charging mode may be understood as a charging mode in which a charging rate is relatively low and phenomena such as fluctuation and overcharging may be avoided during charging. This charging mode can well protect the power battery and reduce an aging speed of the power battery. A scenario to which this charging mode may be applicable is, for example, but is not limited to, that the user wants to charge the electric vehicle in a night break time after work at night, to continue to use the electric vehicle on the next day. In this case, a power battery loss is expected to be minimized in a charging process. In this case, the flexible charging mode may be selected.

When the charging interface is the alternating current charging interface, a corresponding charging mode may include but is not limited to a plurality of slow charging modes with different charging rates, so that the user can select a charging mode based on an actual application scenario. Certainly, the corresponding charging mode may further include a fast charging mode. The fast charging mode may have a same charging rate as the fast charging mode mentioned in the foregoing content, and certainly may also have different charging rates.

In some embodiments, when a display and/or charging software are/is configured on the charging pile, and the display and/or the charging software may provide a human-computer interaction interface, the user may select one of a plurality of charging curves displayed on the human-computer interaction interface. In response to a selection result input by the user, the human-computer interaction interface generates a corresponding selection instruction and sends the selection instruction to a second processor. The second processor may obtain, based on the selection instruction, the charging curve selected by the user, and deliver the charging curve to the electric vehicle through the charging interface. In addition, the reported charging curves and the delivered charging curve all may be transmitted by using, but not limited to, a PGN. In this way, a to-be-used charging curve is selected from the plurality of charging curves on a side of the charging pile, so that the electric vehicle performs charging based on the selected charging curve.

The PGN may uniquely identify a parameter group, and is used to distinguish between different parameter groups. The parameter group may include data corresponding to a charging curve. A parameter group that includes the data of the charging curve may be determined by identifying a parameter group number, so that the data of the charging curve may be transmitted between the charging pile and the electric vehicle by using the PGN.

In some embodiments, when charging is performed based on the selected charging curve, the charging pile may provide a charging voltage and a charging current for the electric vehicle. In addition, a power request period may be set. Each time the power request period is reached, the electric vehicle may first determine a current state of charge of the power battery, then determine a charging power corresponding to the current state of charge from the selected charging curve, and calculate a corresponding charging voltage and charging current by converting the charging power. That is, each time the power request period is reached, the electric vehicle calculates the corresponding charging voltage and charging current, and then reports the corresponding charging voltage and charging current to the charging pile through the charging interface. When receiving the charging voltage and the charging current that are reported by the electric vehicle, the charging pile may provide the corresponding charging voltage and charging current for the electric vehicle through the charging interface, to charge the power battery in the electric vehicle.

The power request period may be set based on an actual requirement. For example, to avoid overcharging, the power request period may be set to be shorter. In this way, the charging voltage and the charging current may be adjusted in real time, and safety of the power battery in a charging process is improved. Therefore, the power request period corresponding to the flexible charging mode may be set to be shorter. If a security requirement for a charging process is not high, and performance of a processor configured to perform charging control is not high, the power request period may be set to be longer. In this way, a quantity of processing times of the processor may be reduced, thereby reducing a computation amount and a processing amount, and reducing power consumption. This case may be applicable to the fast charging mode and the slow charging mode. Based on this, for different charging modes, corresponding power request periods may be set to be different, or certainly may be set to be the same, which is not limited herein.

According to a second aspect, an embodiment of this application further provides an electric vehicle. The electric vehicle may include a charging interface, a power battery, and a processor. The charging interface may be connected to a charger, the power battery may provide electric energy for the electric vehicle, and when charging the electric vehicle, a charging pile essentially charges the power battery. The processor is configured to: report, in response to a connection between the charging interface and the charger of the charging pile, a plurality of charging curves to the charging pile through the charging interface; receive a selected charging curve that is selected from the plurality of charging curves and that is delivered by the charging pile through the charging interface; and charge the power battery based on the selected charging curve.

In this way, a required charging curve is selected from the plurality of charging curves on a side of the charging pile. Even if the charging interface that is in the electric vehicle and that is connected to the charger is fastened, a plurality of charging curves may still be provided for selection, so that a user flexibly selects a required charging curve from the plurality of charging curves based on a requirement of the user. In this way, a limitation of the charging interface on the charging curve is reduced and user experience is improved.

In some embodiments, when the electric vehicle includes a battery management system, the processor may be located in the battery management system and used as one module in the battery management system. In addition, the processor may be implemented by using an original module in the battery management system, or may be used as a newly added module in the battery management system.

A problem-resolving principle of the electric vehicle is similar to the principle in the first aspect. Therefore, for implementation of the electric vehicle, refer to the implementation of the charging pile. Repeated parts are not described again.

According to a third aspect, an embodiment of this application further provides an electric vehicle. The electric vehicle may include a charging interface, a power battery, and a processor. In this case, for a specific implementation of the charging interface and the power battery, refer to the solutions in the first and second aspects, and no repeated description is provided. A function of the processor is different from that in the foregoing solutions in the first aspect and the second aspect. In some embodiments, the processor may be configured to: receive, in response to a connection between the charging interface and a charger of a charging pile, a selected charging curve that is selected from a plurality of charging curves; and charge the power battery based on the selected charging curve. In this case, a required charging curve is selected from the plurality of charging curves on a side of the electric vehicle, to facilitate charging of the power battery based on the selected charging curve. This can reduce a quantity of times of interaction between the electric vehicle and the charging pile, avoid that a to-be-used charging curve cannot be determined due to transmission data loss in an interaction process, and improve a probability of successful charging. In addition, a computation amount of the processor and a cost of the processor are reduced.

In some embodiments, when a display and/or charging software are/is configured on the electric vehicle, and the display and/or the charging software may provide a human-computer interaction interface, a user may select one of a plurality of charging curves displayed on the human-computer interaction interface. In response to a selection result input by the user, the human-computer interaction interface generates a corresponding selection instruction and sends the selection instruction to a processor of the electric vehicle. The processor may obtain, based on the selection instruction, the charging curve selected by the user, to implement a selection of a charging curve, so that the power battery is subsequently charged based on the selected charging curve.

According to a fourth aspect, an embodiment of this application provides a charging pile control method, including:
receiving, in response to a connection between a charger and a charging interface of an electric vehicle, a plurality of charging curves that are supported by the electric vehicle and that are reported by the electric vehicle through the charging interface, where the charging curve is used to describe a relationship between a charging power and a state of charge of a power battery in the electric vehicle, and different charging curves correspond to different charging powers in a same state of charge; and
receiving a selected charging curve that is selected from the plurality of charging curves, and delivering the selected charging curve to the electric vehicle through the charging interface, so that the electric vehicle performs charging based on the selected charging curve.

A problem-resolving principle in the control method is similar to the principle in the first aspect. Therefore, for implementation of the control method, refer to the implementation in the first aspect. Repeated parts are not described again.

According to a fifth aspect, an embodiment of this application provides an electric vehicle control method, including:
reporting, in response to a connection between a charging interface and a charger of a charging pile, a plurality of charging curves to the charging pile through the charging interface, where the charging curve is used to describe a relationship between a charging power and a state of charge of a power battery, and different charging curves correspond to different charging powers in a same state of charge; and
receiving a selected charging curve that is selected from the plurality of charging curves and that is delivered by the charging pile through the charging interface, and charging the power battery based on the selected charging curve.

A problem-resolving principle in the control method is similar to the principle in the second aspect. Therefore, for implementation of the control method, refer to the implementation in the second aspect. Repeated parts are not described again.

According to a sixth aspect, an embodiment of this application provides an electric vehicle control method, including:
receiving, in response to a connection between a charging interface and a charger of a charging pile, a selected charging curve that is selected from a plurality of charging curves; and
charging a power battery based on the selected charging curve, where the charging curve is used to describe a relationship between a charging power and a state of charge of the power battery, and different charging curves correspond to different charging powers in a same state of charge.

A problem-resolving principle in the control method is similar to the principle in the third aspect. Therefore, for implementation of the control method, refer to the implementation in the third aspect. Repeated parts are not described again.

According to a seventh aspect, an embodiment of this application further provides a computer storage medium. The computer storage medium stores executable instructions, and when the executable instructions are executed by a computer, the control methods in the fourth aspect to the sixth aspect are performed.

### BRIEF DESCRIPTION OF DRAWINGS

FIG. 1 is a schematic diagram of an application scenario according to an embodiment of this application;
FIG. 2 is a diagram of interaction between an electric vehicle and a charging pile according to an embodiment of this application;
FIG. 3 is a schematic diagram of a plurality of charging curves according to an embodiment of this application;
FIG. 4 is another diagram of interaction between an electric vehicle and a charging pile according to an embodiment of this application;
FIG. 5 is a flowchart of a control method according to an embodiment of this application; and
FIG. 6 is a schematic diagram of an execution process of a processor in an electric vehicle according to an embodiment of this application.

### Reference numerals:

100: electric vehicle; 110: charging interface; 120: power battery; 130: first processor; 140: battery management system; 150: wheel; 160: motor; 200: charging pile; 210: charger; 220: second processor; 230: charging circuit; 240: cable.

### DESCRIPTION OF EMBODIMENTS

To make the objectives, technical solutions, and advantages of this application clearer, the following further describes this application in detail with reference to the accompanying drawings. However, example embodiments may be implemented in a plurality of forms and should not be construed as being limited to embodiments described herein. On the contrary, these embodiments are provided such that this application is more comprehensive and complete and fully conveys the concept of the example embodiments to persons skilled in the art. Identical reference numerals in the accompanying drawings denote identical or similar structures. Therefore, repeated description thereof is omitted. Expressions of locations and directions in this application are described by using the accompanying drawings as an example. However, changes may also be made as required, and all the changes fall within the protection scope of this application. The accompanying drawings in this application are merely used to illustrate relative position relationships and do not represent an actual scale.

To make the objectives, technical solutions, and advantages of this application clearer, the following further describes this application in detail with reference to the accompanying drawings. A specific operation method in a method embodiment may also be applied to an apparatus embodiment or a system embodiment. It should be noted that in description of this application, "at least one" means one or more, and "a plurality of" means two or more. In view of this, in embodiments of this application, "a plurality of may also be understood as "at least two". In addition, it should be understood that in description of this application, terms such as "first" and "second" are merely used for distinguishing and description, but should not be understood as indicating or implying relative importance, or should not be understood as indicating or implying a sequence.

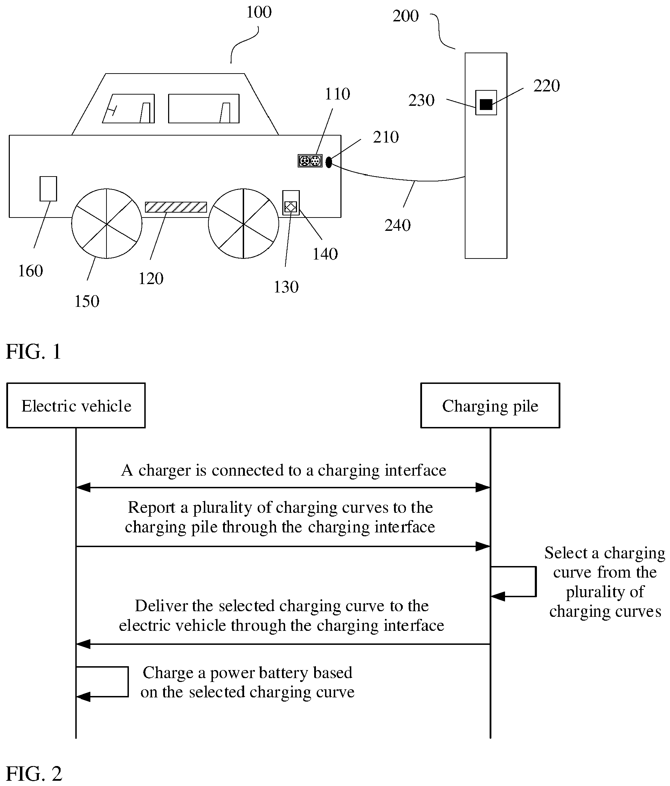

Solutions provided in this application may be applied to an application scenario shown in FIG. 1. As shown in FIG. 1, the application scenario may include a charging pile 200 and an electric vehicle 100.

The electric vehicle 100 may also be referred to as a new energy vehicle, and is a vehicle driven by electric energy. It should be understood that the electric vehicle 100 may be a pure electric vehicle, or may be a hybrid electric vehicle. The electric vehicle 100 mainly includes a battery management system 140, a power battery 120, a motor 160, a wheel 150, and the like. The battery management system 140 includes a first processor 130. The power battery 120 is a battery with a large capacity and high power. The power battery 120 may supply electric energy to some or all components of the electric vehicle 100. In some examples, the power battery 120 may include one or more rechargeable lithium-ion or lead-acid batteries. In addition, the power battery 120 may also use another battery material and configuration, which is not limited herein. When the electric vehicle 100 travels, the power battery 120 may supply power to the motor 160 by using a motor controller unit (Motor Control Unit, MCU) in the battery management system 140. The motor 160 converts electric energy provided by the power battery 120 into mechanical energy, to drive the wheel 150 to rotate, thereby implementing traveling of the electric vehicle 100.

When the electric vehicle 100 is being charged, the power battery 120 of the electric vehicle 100 may usually be charged by using the charging pile 200. The charging pile 200 mainly includes a charging circuit 230, a charger 210, and the like. One end of the charging circuit 230 is connected to a power grid, and the other end is connected to the charger 210 by using a cable 240. An operator may insert the charger 210 into a charging interface 110 of the electric vehicle 100, so that the charger 210 is connected to the battery management system 140 in the electric vehicle 100. The charging circuit 230 of the charging pile 200 may charge the power battery 120 by using the charger 210. The charging circuit 230 includes a second processor 220. After the charger 210 is inserted into the charging interface, the battery management system 140 establishes communication with the second processor 220 in the charging circuit 230, to determine a power supply capability of the charging pile 200 and a type of a charging cable connecting the charging pile 200 and the battery management system 140. After the battery management system 140 completes related charging configuration based on the power supply capability and an output power of the charging pile 200, the battery management system 140 controls an on board charger (On Board Charger, OBC) inside the electric vehicle 100 to receive electric energy provided by the charging pile 200. In this way, the power battery 120 is charged.

Currently, most charging piles are direct current charging piles. A charging circuit in the charging pile may convert an alternating current provided by a power grid into a direct current. In this case, the direct current charging pile may output a voltage of 200 V to 750 V, to implement fast charging of an electric vehicle. Certainly, in the conventional technology, there is also an alternating current charging pile, configured to provide an alternating current externally. In this case, the alternating current charging pile may output a voltage of 220 V or 380 V, to implement slow charging of an electric vehicle.

A direct current charging interface and an alternating current charging interface are generally disposed in the electric vehicle. If the direct current charging pile is used for charging, a charger of the direct current charging pile may be inserted into the direct current charging interface of the electric vehicle. In this case, a fast charging mode is used for charging by default. If the alternating current charging pile is used for charging, a charger of the alternating current charging pile may be inserted into the alternating current charging interface of the electric vehicle. In this case, a slow charging mode is used for charging by default. It should be understood that one charging module corresponds to one charging curve, and different charging curves correspond to different charging modes.

In this way, because the charging pile has been fastened, the charging mode has to be limited. When the direct current charging pile is used to charge the electric vehicle, only the fast charging mode may be selected, and the fast charging mode cannot be changed, and charging needs to be performed based on a corresponding charging curve. Similarly, when the alternating current charging pile is used to charge the electric vehicle, only the slow charging mode may be selected, and the slow charging mode cannot be changed. This greatly limits a requirement of a user, and deteriorates user experience.

Based on this, in the technical solution provided in this embodiment of this application, even if the direct current charging interface or the alternating current charging interface is connected, a charging curve may still be selected from a plurality of supported charging curves based on a requirement, and charging is performed based on the charging curve. Therefore, more options are provided for the user, various requirements of the user are met, and user experience is improved.

Based on the foregoing application scenario, when the charging curve is selected from the plurality of charging curves, the following two cases may be included:
Case 1: The electric vehicle reports the plurality of charging curves to the charging pile, and selects a charging curve from the plurality of charging curves on a side of the charging pile.

With reference to FIG. 2, a process of interaction between the charging pile and the electric vehicle may include the following steps:
S201: A processor in the electric vehicle reports, in response to a connection between a charger and a charging interface, the plurality of charging curves to the charging pile through the charging interface, where the charging curve is used to describe a relationship between a charging power and a state of charge of a power battery, and different charging curves correspond to different charging powers in a same state of charge.

In some embodiments, for ease of description, the processor in the electric vehicle may be referred to as a first processor, and the processor in the electric vehicle and the first processor may be used interchangeably.

In some embodiments, the plurality of reported charging curves may be transmitted by using, but not limited to, a parameter group number PGN (Parameter Group Number). The PGN may uniquely identify a parameter group, and is used to distinguish between different parameter groups. The parameter group may include data corresponding to a charging curve. A parameter group that includes the data of the charging curve may be determined by identifying a parameter group number, so that the data of the charging curve may be transmitted between the charging pile and the electric vehicle by using the PGN.

In some embodiments, the charging interface may be, but is not limited to, a direct current charging interface or an alternating current charging interface, or may be another interface that may be disposed in the electric vehicle and that may be used for charging. This is not limited herein. In addition, a charging curve may be considered as a curve corresponding to a charging mode. Different charging curves correspond to different charging modes, and different charging curves correspond to different charging powers in a same state of charge, so that charging rates in different charging modes are different.

When the charging interface is the direct current charging interface, a corresponding charging mode may include but is not limited to a rapid charging mode, a fast charging mode, a flexible charging mode, and the like. The rapid charging mode has a relatively large charging power and relatively long duration, so that a charging rate is relatively high, and the power battery in the electric vehicle can be charged with sufficient power within a relatively short time, thereby achieving an objective of rapid charging. This is applicable to a scenario in which a charging time is relatively short and power utilization is urgently needed. For example, but not limited to, the user forgets to charge the electric vehicle on the previous day, and finds that power is insufficient to travel to a destination in the morning. In this case, the user may use the rapid charging mode, and charge the electric vehicle with sufficient power in a shortest time. A charging rate of the fast charging mode is slightly less than a charging rate of the rapid charging mode, but the power battery can still be charged with a relatively large amount of power within a relatively short time. A difference lies in that within a same time, an amount of power charged in the rapid charging mode is higher than that in the fast charging mode. This fast charging mode is applicable to a scenario in which a charging time is not quite sufficient. For example, but not limited to, when the electric vehicle runs on a road, and the power is insufficient, the user charges the electric vehicle in a rest area. However, the user wants to fully charge the electric vehicle within a short rest time. In this case, the fast charging mode may be used. The flexible charging mode may be understood as a charging mode in which a charging rate is relatively low and phenomena such as fluctuation and overcharging may be avoided during charging. This charging mode can well protect the power battery and reduce an aging speed of the power battery. A scenario to which this charging mode may be applicable is, for example, but is not limited to, that the user wants to charge the electric vehicle in a night break time after work at night, to continue to use the electric vehicle on the next day. In this case, a power battery loss is expected to be minimized in a charging process. In this case, the flexible charging mode may be selected.

When the charging interface is the alternating current charging interface, a corresponding charging mode may include but is not limited to a plurality of slow charging modes with different charging rates, so that the user can select a charging mode based on an actual application scenario. Certainly, the corresponding charging mode may further include a fast charging mode. The fast charging mode may have a same charging rate as the fast charging mode mentioned in the foregoing content, and certainly may also have different charging rates.

In some embodiments, when the electric vehicle includes a battery management system, the first processor may be located in the battery management system and used as one module in the battery management system. In addition, the first processor may be implemented by using an original module in the battery management system, or may be used as a newly added module in the battery management system.

S202: The processor in the charging pile receives the selected charging curve from the plurality of charging curves, and delivers the selected charging curve to the electric vehicle through the charging interface.

In some embodiments, for ease of description, the processor in the charging pile may be referred to as a second processor, and the processor and the second processor in the charging pile may be used interchangeably.

In some embodiments, when a display and/or charging software are/is configured on the charging pile, and the display and/or the charging software may provide a human-computer interaction interface, the user may select one of a plurality of charging curves displayed on the human-computer interaction interface. In response to a selection result input by the user, the human-computer interaction interface generates a corresponding selection instruction and sends the selection instruction to a second processor. The second processor may obtain, based on the selection instruction, the charging curve selected by the user, and deliver the charging curve to the electric vehicle through the charging interface. In addition, the delivered charging curve may be transmitted by using, but not limited to, the PGN. In this way, a to-be-used charging curve is selected from the plurality of charging curves on a side of the charging pile, so that the electric vehicle performs charging based on the selected charging curve.

In some embodiments, when the charger is physically connected to the charging interface, the charging pile may turn on a low-voltage auxiliary power supply to perform a self-check and an initialization. Then, the charging pile receives the plurality of charging curves reported by the electric vehicle, and delivers the selected charging curve, to select and determine the charging curve. Then, a handshake phase is entered, and handshake between the charger and the electric vehicle is performed, so that the charging pile and the electric vehicle identify each other and determine necessary information (for example, information such as a parameter of a power battery and a maximum power that may be provided by the charging pile). Next, a charging parameter configuration phase is entered. The charging pile may deliver a maximum output power to the electric vehicle. The electric vehicle determines a proper charging power based on the delivered maximum output power and a maximum charging power required by the power battery, and reports the proper charging power to the charging pile. Then, both the electric vehicle and the charging pile enter a charging phase. Alternatively, the charging parameter configuration phase may be further performed according to the following process: The electric vehicle determines, based on the maximum output power delivered by the charging pile, whether the maximum charging power required by the power battery can be met, and feeds back a determining result to the charging pile. When the determining result is yes, both the electric vehicle and the charging pile enter the charging phase. When the determining result is no, the electric vehicle and the charging pile do not enter the charging phase, and may send an alarm and prompt that the charging cannot be performed.

S203: The processor in the electric vehicle charges the power battery based on the selected charging curve.

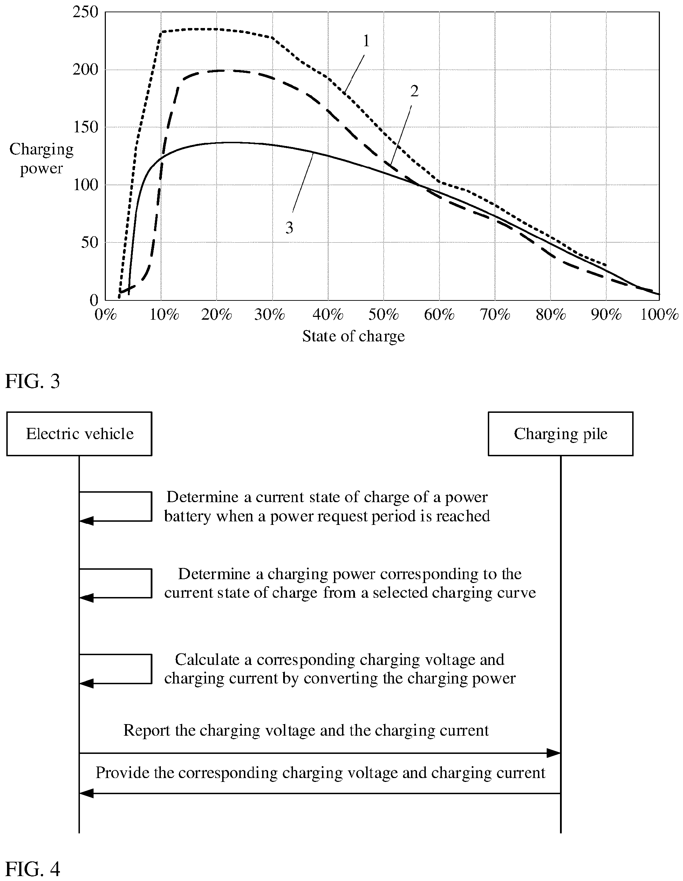

For example, FIG. 3 shows three charging curves.

A maximum charging power of a charging curve 1 is the largest in the three charging curves, and the charging power is always the largest in a range of 10% to 30% in the state of charge. This indicates that when the charging curve 1 is used for charging, sufficient power may be charged in a short time. Therefore, a charging mode corresponding to the charging curve 1 may be the rapid charging mode.

A maximum charging power of a charging curve 2 is slightly less than that of the curve 1, but the charging power is always at a maximum value in a range of 10% to 30% in the state of charge. This indicates that when the charging curve 2 is used for charging, a relatively large amount of power may still be charged within a relatively short time, but a relatively small amount of power is charged in a same time as that of the charging curve 1. Therefore, a charging mode corresponding to the charging curve 2 may be the fast charging mode.

A maximum charging power of a charging curve 3 is the smallest in the three charging curves, and a relatively large charging power may be reached when the state of charge is less than 10%. Then, the charging power is relatively stable when the state of charge is 5% to 50%. This indicates that when the charging curve 3 is used for charging, impact of the relatively large charging power on the power battery can be reduced, and the power battery can be charged stably. In this way, the power battery can be effectively protected, and an overcharge phenomenon can be avoided. Therefore, a charging mode corresponding to the charging curve 3 may be the flexible charging mode.

The foregoing merely describes charging curves corresponding to the rapid charging mode, the fast charging mode, and the flexible charging mode by using an example. However, in an actual case, the charging curves corresponding to the rapid charging mode, the fast charging mode, and the flexible charging mode are not limited to those shown in FIG. 3, and are merely examples for description herein. In addition, in an actual case, each charging mode may correspond to one charging curve.

In some embodiments, with reference to FIG. 4, when charging is performed based on the selected charging curve, the charging pile may provide a charging voltage and a charging current for the electric vehicle. In addition, a power request period may be set. Each time the power request period is reached, the electric vehicle may first determine a current state of charge of the power battery, then determine a charging power corresponding to the current state of charge from the selected charging curve, and calculate a corresponding charging voltage and charging current by converting the charging power. That is, each time the power request period is reached, the electric vehicle calculates the corresponding charging voltage and charging current, and then reports the corresponding charging voltage and charging current to the charging pile through the charging interface. When receiving the charging voltage and the charging current that are reported by the electric vehicle, the charging pile may provide the corresponding charging voltage and charging current for the electric vehicle through the charging interface, to charge the power battery in the electric vehicle.

The power request period may be set based on an actual requirement. For example, to avoid overcharging, the power request period may be set to be shorter. In this way, the charging voltage and the charging current may be adjusted in real time, and safety of the power battery in a charging process is improved. Therefore, the power request period corresponding to the flexible charging mode may be set to be shorter. If a security requirement for a charging process is not high, and performance of a processor configured to perform charging control is not high, the power request period may be set to be longer. In this way, a quantity of processing times of the processor may be reduced, thereby reducing a computation amount and a processing amount, and reducing power consumption. This case may be applicable to the fast charging mode and the slow charging mode. Based on this, for different charging modes, corresponding power request periods may be set to be different, or certainly may be set to be the same, which is not limited herein.

In conclusion, after S201 and S203 are performed, because the electric vehicle may support a plurality of charging curves, even if the charging interface that is in the electric vehicle and that is connected to the charging pile is fastened, the plurality of charging curves may still be provided for selection, so that the user flexibly selects a required charging curve from the plurality of charging curves based on a requirement of the user. In this way, a limitation of the charging interface on the charging curve is reduced and user experience is improved.

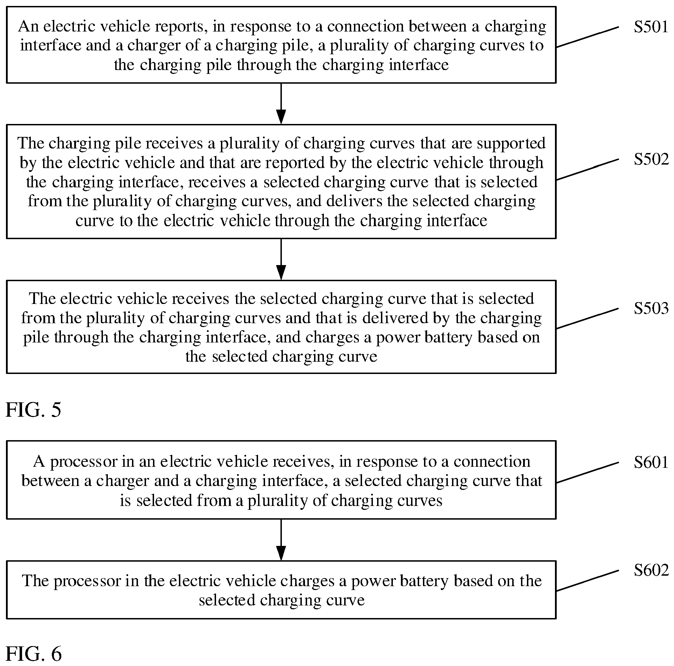

Based on Case 1, an embodiment of this application provides a control method. As shown in FIG. 5, the method may include the following steps:

S501: An electric vehicle reports, in response to a connection between a charging interface and a charger of a charging pile, a plurality of charging curves to the charging pile through the charging interface.

S502: The charging pile receives a plurality of charging curves that are supported by the electric vehicle and that are reported by the electric vehicle through the charging interface, receives a selected charging curve that is selected from the plurality of charging curves, and delivers the selected charging curve to the electric vehicle through the charging interface.

S503: The electric vehicle receives the selected charging curve that is selected from the plurality of charging curves and that is delivered by the charging pile through the charging interface, and charges a power battery based on the selected charging curve.

Case 2: A charging curve is selected from a plurality of charging curves on one side of the electric vehicle.

With reference to FIG. 6, a specific process may include the following steps:

S601: A processor in the electric vehicle receives, in response to a connection between a charger and a charging interface, a selected charging curve that is selected from the plurality of charging curves.

S602: The processor in the electric vehicle charges a power battery based on the selected charging curve.

In some embodiments, when a display and/or charging software are/is configured on the electric vehicle, and the display and/or the charging software may provide a human-computer interaction interface, a user may select one of a plurality of charging curves displayed on the human-computer interaction interface. In response to a selection result input by the user, the human-computer interaction interface generates a corresponding selection instruction and sends the selection instruction to a processor of the electric vehicle. The processor may obtain, based on the selection instruction, the charging curve selected by the user, to implement a selection of a charging curve, so that the power battery is subsequently charged based on the selected charging curve.

In some embodiments, a difference between Case 2 and Case 1 lies in that the charging curve is selected from different devices. Other implementations are the same. For details, refer to the descriptions in Case 1. Repeated parts are not described again.

Based on Case 2, an embodiment of this application further provides a control method, which may include the following steps:

The electric vehicle receives, in response to the connection between the charger and the charging interface, the selected charging curve that is selected from the plurality of charging curves.

The electric vehicle charges the power battery based on the selected charging curve.

Although preferred embodiments of this application are described, persons skilled in the art can make changes and modifications to these embodiments after they learn of a basic inventive concept. Therefore, the appended claims are intended to be construed as including the preferred embodiments and all changes and modifications that fall within the scope of this application.

## Claims

1. A charging pile, comprising:
a charger; and
a processor, configured to:
receive, in response to a connection between the charger and a charging interface of an electric vehicle, a plurality of charging curves that are supported by the electric vehicle and that are reported by the electric vehicle through the charging interface, wherein the charging curve is used to describe a relationship between a charging power and a state of charge of a power battery in the electric vehicle, and different charging curves correspond to different charging powers in a same state of charge; and
receive a selected charging curve that is selected from the plurality of charging curves, and deliver the selected charging curve to the electric vehicle through the charging interface, so that the electric vehicle performs charging based on the selected charging curve.

2. The charging pile according to claim 1, wherein the processor is configured to:
provide, in response to a charging voltage and a charging current that are reported by the electric vehicle, the charging voltage and the charging current for the electric vehicle.

3. The charging pile according to claim 1, wherein the plurality of reported charging curves and the delivered selected charging curve are all transmitted by using a parameter group number, PGN.

4. The charging pile according to any one of claims 1 to 3, further comprising:
a human-computer interaction interface, configured to:
display the plurality of charging curves, wherein
the processor is configured to receive the selected charging curve that is input through the human-computer interaction interface.

5. An electric vehicle, comprising:
a charging interface;
a power battery; and
a processor, configured to:
report, in response to a connection between the charging interface and a charger of a charging pile, a plurality of charging curves to the charging pile through the charging interface, wherein the charging curve is used to describe a relationship between a charging power and a state of charge of the power battery, and different charging curves correspond to different charging powers in a same state of charge; and
receive a selected charging curve that is selected from the plurality of charging curves and that is delivered by the charging pile through the charging interface, and charge the power battery based on the selected charging curve.

6. The electric vehicle according to claim 5, wherein the processor is configured to:
when a preset power request period is reached, determine a current state of charge of the power battery, and determine a charging power corresponding to the current state of charge from the selected charging curve;
calculate a charging voltage and a charging current that correspond to the determined charging power;
report the charging voltage and the charging current to the charging pile through the charging interface; and
charge the power battery based on the charging voltage and the charging current that are provided by the charging pile through the charging interface.

7. The electric vehicle according to claim 5 or 6, wherein the charging interface is a direct current charging interface.

8. An electric vehicle, comprising:
a charging interface;
a power battery; and
a processor, configured to:
receive, in response to a connection between the charging interface and a charger of a charging pile, a selected charging curve that is selected from a plurality of charging curves; and
charge the power battery based on the selected charging curve, wherein the charging curve is used to describe a relationship between a charging power and a state of charge of the power battery, and different charging curves correspond to different charging powers in a same state of charge.

9. The electric vehicle according to claim 8, further comprising:
a human-computer interaction interface, configured to:
display the plurality of charging curve, wherein
the processor is configured to receive the selected charging curve that is input through the human-computer interaction interface.

10. A charging pile control method, comprising:
receiving, in response to a connection between a charger and a charging interface of an electric vehicle, a plurality of charging curves that are supported by the electric vehicle and that are reported by the electric vehicle through the charging interface, wherein the charging curve is used to describe a relationship between a charging power and a state of charge of a power battery in the electric vehicle, and different charging curves correspond to different charging powers in a same state of charge; and
receiving a selected charging curve that is selected from the plurality of charging curves, and delivering the selected charging curve to the electric vehicle through the charging interface, so that the electric vehicle performs charging based on the selected charging curve.

11. An electric vehicle control method, comprising:
reporting, in response to a connection between a charging interface and a charger of a charging pile, a plurality of charging curves to the charging pile through the charging interface, wherein the charging curve is used to describe a relationship between a charging power and a state of charge of a power battery, and different charging curves correspond to different charging powers in a same state of charge; and
receiving a selected charging curve that is selected from the plurality of charging curves and that is delivered by the charging pile through the charging interface, and charging the power battery based on the selected charging curve.

12. A computer storage medium, wherein the computer storage medium stores executable instructions, and when the executable instructions are executed by a computer, the control method according to any one of claims 10 to 11 is performed.
